(19) Europäisches Patentamt
European Patent Office
Office européen des brevets

(11) EP 2 521 653 B1

(12) **EUROPÄISCHE PATENTSCHRIFT**

(45) Veröffentlichungstag und Bekanntmachung des Hinweises auf die Patenterteilung:
**30.10.2013 Patentblatt 2013/44**

(21) Anmeldenummer: **11700009.1**

(22) Anmeldetag: **03.01.2011**

(51) Int Cl.:
***B41M 5/26*** *(2006.01)* ***C08G 18/76*** *(2006.01)*
***C08G 18/66*** *(2006.01)* ***C08G 18/48*** *(2006.01)*
***C08K 3/22*** *(2006.01)* ***A01K 11/00*** *(2006.01)*

(86) Internationale Anmeldenummer:
**PCT/EP2011/050015**

(87) Internationale Veröffentlichungsnummer:
**WO 2011/083100 (14.07.2011 Gazette 2011/28)**

# (54) TRANSPARENTES, LASERBESCHRIFTBARES POLYURETHAN

TRANSPARENT, LASER-WRITABLE POLYURETHANE

POLYURÉTHANE TRANSPARENT APTE À L'IMPRESSION LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.01.2010 EP 10150111**

(43) Veröffentlichungstag der Anmeldung:
**14.11.2012 Patentblatt 2012/46**

(73) Patentinhaber: **BASF SE**
**67056 Ludwigshafen (DE)**

(72) Erfinder:
- **PRISSOK, Frank**
  **49448 Lemförde (DE)**
- **DÜVEL, Nicole**
  **49459 Lembruch (DE)**
- **GLINKA, Aleksander**
  **49448 Lemförde (DE)**

(56) Entgegenhaltungen:
**EP-A2- 1 190 988** **WO-A1-2006/065611**
**US-A1- 2007 029 294**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 521 653 B1

## Beschreibung

Die vorliegende Erfindung betrifft ein transparentes, laserbeschriftbares, vorzugsweise thermoplastisches Polyurethan, dessen Herstellung und Verwendung.

Die Kennzeichnung von Produktionsgütern wird in fast allen Industriezweigen zunehmend wichtiger. So müssen häufig zum Beispiel Produktionsdaten, Verfallsdaten, Barcodes, Firmenlogos, Seriennummern etc. auf diesen Gütern aufgebracht werden. Derzeit werden diese Markierungen vielfach noch mit konventionellen Techniken wie Drucken, Prägen, Stempeln und Etikettieren ausgeführt. Wachsende Bedeutung gewinnt aber die berührungslose, sehr schnelle und flexible Markierung mit Lasern, insbesondere bei Kunststoffprodukten und -verpackungen. Mit dieser Technik ist es möglich, Kennzeichen, z. B. graphische Beschriftungen wie Barcodes, mit hoher Geschwindigkeit auch auf eine nicht plane Oberfläche aufzubringen. Da sich die Beschriftung im Kunststoffkörper selbst befindet, ist sie dauerhaft, abriebbeständig und fälschungssicher.

Für die Laserkennzeichnung von Kunststoffen werden neben $CO_2$-Lasern zunehmend Nd-YAG-Laser und Excimer-Laser verwendet. Viele Kunststoffe, wie z. B. Polyolefine und Polystyrole, lassen sich ohne eine zusätzliche Modifizierung jedoch nur schwierig oder überhaupt nicht mit Lasern markieren. So bewirkt beispielsweise ein $CO_2$-Laser, der Licht im Infrarotbereich bei 10,6 $\mu$m aussendet, bei Polyolefinen und Polystyrolen selbst bei sehr hohen Leistungen nur eine schwache, kaum lesbare Markierung. Bei Polyurethanen und Polyetherestern tritt mit Nd-YAG-Lasern ebenfalls keine Wechselwirkung auf. Um eine gute Markierung zu erzielen, darf der Kunststoff das Laserlicht weder völlig reflektieren noch völlig durchlassen, da es dann zu keiner Wechselwirkung kommt. Bei einer zu starken Energieabsorption hingegen kann der Kunststoff im bestrahlten Bereich verdampfen, wobei dann eine Gravur und keine sichtbare graphische Kennzeichnung resultieren.

Es ist bekannt, Kunststoffe laserbeschriftbar zu machen, indem man ihnen entsprechende Absorber, z. B. absorbierende Pigmentpartikel, als Zusatzstoffe zugibt. Das eingestrahlte Laserlicht wird dann in Wärme umgewandelt, so dass die Temperatur der Pigmentpartikel innerhalb von Sekundenbruchteilen stark ansteigt. Wird durch absorbiertes Laserlicht in einem eng lokalisierten Bereich des Kunststoffs mehr Wärme erzeugt, als gleichzeitig an die Umgebung abgegeben werden kann, so kommt es zu einer starken lokalen Erwärmung und entweder zu einer Carbonisierung des Kunststoffs, oder zu einer chemischen Reaktion des Kunststoffs und/oder des Absorbers oder zu einer Gasbildung, z. B. von $CO_2$. Diese Vorgänge führen zu einer Veränderung von Farbe, Transparenz und/oder Brechungswinkel für einfallendes Licht und damit zu einer Markierung des Kunststoffs.

Es ist bekannt, organische Farbstoffe und Pigmente zur Modifizierung von Kunststoffen einzusetzen, um diese lasermarkierbar zu machen.

Die EP-A-684144 A1 beschreibt eine Zusammensetzung zum Einfärben von Kunststoffteilen durch Laserbestrahlung, die eine Mischung aus wenigstens einem Opacifier und wenigstens einer chromogenen Verbindung enthält. Dabei sind die Opacifier ausgewählt unter Glimmer, nanoskaligem $TiO_2$ und Metalloxiden auf Basis von Antimonoxid.

Die WO 01/00719 A1 beschreibt eine Polymerzusammensetzung, die ein Polymer und ein Additiv enthält, welches die Lasermarkierung ermöglicht. Dazu wird Antimontrioxid mit einer Partikelgröße > 0,5 $\mu$m in einer Konzentration von wenigstens 0,1 Gew.-% eingesetzt.

Die WO 95/30546 A1 beschreibt lasermarkierbare Kunststoffe, insbesondere thermoplastische Polyurethane, die Pigmente enthalten, welche mit dotiertem Zinndioxid beschichtet sind.

Die WO 2006/065611 A1 beschreibt ein Material aus einem thermoplastischen Polyurethan, einem opazifierenden Bismuthoxid und gegebenenfalls einem Farbmittel und die Verwendung dieses Materials bei einer Lasermarkierung.

Die zuvor genannten Verfahren weisen wenigstens einen der folgenden Nachteile auf:

- Es werden Pigmente eingesetzt, deren Partikelgrößen im $\mu$m-Bereich ($\geq$ 1000 nm) liegen und die daher eine erhebliche Streuung im sichtbaren Spektralbereich aufweisen, die die Kunststoffmatrix einfärben, eine Eigenfarbe besitzen oder in Konzentrationen eingesetzt werden, die eine deckende Einfärbung hervorrufen. Somit sind keine transparenten Kunststoffe beschriftbar.

- Die Absorption des Dotierstoffs ist bei der zur Kennzeichnung verwendeten Laserwellenlänge nicht maximal. Somit ist eine höhere Einsatzmenge des Dotierstoffs erforderlich, die häufig über 0,1 % liegt.

- Die Verwendung von Antimon-haltigen Dotierstoffen ist aufgrund der unerwünschten Schwermetallbelastung der dotierten Kunststoffe unerwünscht.

- Einige der bislang als Dotierstoff verwendeten Pigmente, wie Antimon-dotiertes Zinnoxid, sind elektrisch leitfähig. Durch ihren Einsatz wird die Leitfähigkeit des Kunststoffs erhöht und somit seine Kriechstromfestigkeit erniedrigt, was für bestimmte Anwendungen ungünstig ist.

Der Erfindung lag die Aufgabe zugrunde, verbesserte Materialien auf Basis vorzugsweise thermoplastischer Polyurethane (TPU) zur Verfügung zu stellen.

Gegenstand der Erfindung ist ein transparentes, vorzugsweise thermoplastisches Polyurethan (TPU), welches ein Bismuthoxid als Kontrastmittel enthält und welches mittels energiereicher Strahlung beschriftbar ist, dadurch gekennzeichnet, dass das Bismuthoxid eine mittlere Korngröße < 1,5 μm aufweist und in einer Menge < 0,5 Gew. % bezogen auf das Polyurethan enthalten ist.

Unter einem transparenten Polyurethan wird insbesondere ein Polyurethan, vorzugsweise thermoplastisches Polyurethan, verstanden, bei dem die Transmission von Licht einer Wellenlänge von 400 nm bis 800 nm einer 2 mm dicken Spritzgussplatte > als 80 %, bevorzugt > 85 % ist, weiter bevorzugt > 90 % und besonders bevorzugt > 95 % ist.

Die Korngröße wird vorzugsweise mittels Transmissionselektronenmikroskopie durch Ausmessen eines Schnittes eines Polyurethanprüflings bestimmt. Der Schnitt hat dabei vorzugsweise eine Dicke von 2 mm. Bei der mittleren Korngröße handelt es sich vorzugsweise um das Zahlenmittel. In einer bevorzugten Ausführungsform weist das Bismuthoxid eine mittlere Korngröße < 0,5 μm auf.

Das Bismuthoxid bedeutet vorzugsweise eine Verbindung der Formel $Bi_2O_3$. Es ist in einer Menge von weniger als 0,5 Gew.-%, bezogen auf das Polyurethan und besonders bevorzugt in einer Menge von weniger als 0,1 Gew.-% in dem Polyurethan enthalten.

Die Erfindung betrifft weiterhin ein Verfahren zur Herstellung transparenter beschrifteter vorzugsweise thermoplastischer Polyurethane, dadurch gekennzeichnet, dass man das erfindungsgemäße vorzugsweise thermoplastische Polyurethan bildmäßig mit einer energiereichen Strahlung bestrahlt.

Unter bildmäßiger Bestrahlung wird dabei verstanden, dass die Bestrahlung gezielt nur an ausgewählten Stellen vorgenommen wird, so dass vorzugsweise Zahlen, Buchstaben oder sonstige Markierungen erzeugt werden können.

Die Erfindung betrifft weiterhin ein bildmäßig beschriftetes vorzugsweise thermoplastisches Polyurethan, erhältlich durch bildmäßige Beschriftung des erfindungsgemäßen noch nicht beschrifteten vorzugsweise thermoplastischen Polyurethans. Die Erfindung betrifft insbesondere ein beschriftetes, vorzugsweise thermoplastisches Polyurethan, welches dadurch gekennzeichnet ist, dass es an nicht beschrifteten Stellen transparent ist und zwischen beschrifteten und unbeschrifteten Stellen einen Kontrastwert nach DIN66236 von mindestens 68, bevorzugt von mindestens 70 aufweist.

Das vorzugsweise verwendete Bismuthoxid ist frei im Handel erhältlich, beispielsweise als Bismut(III)oxid der Firma Sigma-Aldrich. In einer bevorzugten Ausführungsform weist es folgende Eigenschaften auf:

Reinheit: 99,9%
Korngröße: < 10 μm

Liegen die Bismuthoxide in einer ungeeigneten Körnung vor, können sie durch Mahlung und Siebung auf die erfindungsgemäße Korngroße von 1500 nm bis kleiner als 500 nm gebracht werden. Das Bismuthoxid kann in das vorzugsweise thermoplastische Polyurethan auf mehreren Wegen eingearbeitet werden. Bevorzugte Einbringungsarten sind:

1. Zusatz des Bismuthoxids zu einer Ausgangskomponente bereits bei der Herstellung des vorzugsweise thermoplastischen Polyurethans, vorzugsweise zum
Polyisocyanat oder
Polyol oder
Kettenverlängerer.

2. Einarbeitung des Bismuthoxids in das fertig gebildete vorzugsweise thermoplastische Polyurethan TPU-1 während des Extrusions- bzw. Spritzgussprozesses, mittels eines Konzentrates aus Bismuthoxid in einem vorzugsweise thermoplastischen Polyurethan, das 1 bis 50 Gew.-%, vorzugsweise 1 bis 10 Gew.-% Bismuthoxid enthält. Das im Konzentrat verwendete Polyurethan (TPU-2) ist in einer bevorzugten Ausführungsform das Gleiche oder im Wesentlichen das Gleiche wie TPU-1, es ist aber auch möglich, TPU-2 etwas weicher einzustellen.

Bei den erfindungsgemäß zu verwendenden Polyurethanen handelt es sich vorzugsweise um thermoplastische Polyurethane (TPU) . Diese sind allgemein bekannt und ihre Herstellung ist vielfach beschrieben. Sie erfolgt üblicherweise durch Umsetzung von zwei- und höherwertigen Isocyanaten oder von entsprechenden Isocyanatanaloga mit gegenüber Isocyanaten reaktiven Verbindungen. Die Herstellung erfolgt nach üblichen Verfahren, vorzugsweise im one- shot-Verfahren oder nach dem Prepolymerverfahren, z. B. in Formen, in einem Reaktionsextruder oder auch einer Bandanlage. Ein spezielles Herstellverfahren stellt das Reaction- Injection- Moulding- (RIM- ) Verfahren dar, das bevorzugt zur Herstellung von Polyurethanen mit einem geschäumten oder kompakten Kern und einer überwiegend kompakten, nichtporösen Oberfläche angewandt wird. Die Verbindung (I) und deren Derivate eignen sich in vorteilhafter Weise für alle

diese Verfahren.

Polyurethane sind im Allgemeinen aufgebaut aus wenigstens einem Polyisocyanat und wenigstens einer Verbindung mit wenigstens zwei gegenüber Isocyanatgruppen reaktiven Gruppen pro Molekül. Geeignete Polyisocyanate besitzen vorzugsweise 2 bis 5 NCO-Gruppen. Die gegenüber Isocyanatgruppen reaktiven Gruppen sind vorzugsweise ausgewählt unter Hydroxyl-, Mercapto-, primären und sekundären Aminogruppen. Dazu zählen vorzugsweise zwei- oder höherwertige Polyole.

Geeignete Polyisocyanate sind aliphatische, cycloaliphatische, araliphatische und aromatische Isocyanate. Geeignete aromatische Diisocyanate sind insbesondere 2, 2'-, 2, 4'- und/ oder 4, 4'- Diphenylmethandiisocyanat (MDI), 1, 5- Naphthylendiisocyanat (NDI), 2, 4- und/ oder 2, 6- Toluylendiisocyanat (TDI), Diphenylmethandiisocyanat, 3, 3'-Dimethyl- diphenyl- diisocyanat, 1, 2- Diphenylethandiisocyanat und/ oder Phenylendiisocyanat. Aliphatische und cycloaliphatische Diisocyanate umfassen insbesondere Tri-, Tetra-, Penta-, Hexa-, Hepta- und/ oder Oktamethylendiisocyanat, 2- Methyl- pentamethylen- 1, 5- diisocyanat, 2- Ethylbutylen- 1, 4- diisocyanat, 1- Isocyanato- 3, 3, 5- trimethyl-5- isocyanatomethyl- cyclohexan (Isophoron- diisocyanat, IPDI), 1, 4- und/ oder 1, 3- Bis (isocyanatomethyl) cyclohexan (HXDI), Cyclohexan- 1, 4- diisocyanat, 1- Methyl- 2, 4- und/ oder 2, 6- cyclohexandiisocyanato und/ oder 4, 4'-, 2, 4'- und/ oder 2, 2'- Dicyclo- hexylmethan- diisocyanat. Bevorzugte Beispiele für höherfunktionelle Isocyanate sind Triisocyanate, z. B. Triphenylmethan- 4, 4', 4"- triisocyant, weiterhin die Cyanurate der vorgenannten Diisocyanate, sowie die durch partielle Umsetzung von Diisocyanaten mit Wasser erhältlichen Oligomere, z. B. die Biurethe der vorgenannten Diisocyanate, ferner Oligomere, die durch gezielte Umsetzung von semiblockierten Diisocyanaten mit Polyolen, die im Mittel mehr als 2 und vorzugsweise 3 oder mehr Hydroxy- Gruppen aufweisen, erhältlich sind.

Als Polyolkomponenten werden dabei für Polyurethanhartschaumstoffe, die gegebenenfalls Isocyanuratstrukturen aufweisen können, hochfunktionelle Polyole, insbesondere Polyetherpolyole auf Basis hochfunktioneller Alkohole, Zuckeralkohole und/oder Saccharide als Startermoleküle eingesetzt. Für flexible Polyisocyanat-Polyadditionsprodukte, z. B. Polyurethanweichschaumstoffe oder RIM-Werkstoffe, sind 2- und/oder 3-funktionelle Polyetherpolyole auf Basis von Glyzerin und/oder Trimethylolpropan und/oder Glykolen als Startermoleküle als Polyole und 2- und/oder 3-funktionelle Polyestherpolyole auf Basis von Glyzerin und/oder Trimethylolpropan und/oder Glykolen als zu veresternde Alkohole als Polyole bevorzugt. Thermoplastische Polyurethane basieren üblicherweise auf überwiegend difunktionellen Polyesterpolyalkoholen und/oder Polyetherpolyalkoholen, die bevorzugt eine mittlere Funktionalität von 1,8 bis 2,5, besonders bevorzugt 1,9 bis 2,1, aufweisen.

Es handelt sich bei dem Polyurethan neben dem Polyesterpolyurethan vorzugsweise um ein Polyetherpolyurethan, besonders bevorzugt ist ein Polytetrahydrofuran-Polyetherpolyurethan.

Die Herstellung der Polyetherpolyole erfolgt dabei nach einer bekannten Technologie. Geeignete Alkylenoxide zur Herstellung der Polyole sind insbesondere 1, 3- Propylenoxid, 1, 2- bzw. 2, 3- Butylenoxid, und insbesondere Ethylenoxid und 1, 2- Propylenoxid. Die Alkylenoxide können einzeln, alternierend nacheinander oder als Mischungen verwendet werden. Bevorzugt werden Alkylenoxide verwendet, die zu primären Hydroxylgruppen im Polyol führen. Besonders bevorzugt werden als Polyole solche eingesetzt, die zum Abschluss der Alkoxylierung mit Ethylenoxid alkoxyliert wurden und damit primäre Hydroxylgruppen aufweisen. Weitere geeignete Polyetherole sind Polytetrahydrofurane und Polyoxymethylene. Die Polyetherpolyole besitzen eine Funktionalität von vorzugsweise 2 bis 6 und insbesondere 2 bis 3 und ein zahlenmittleres Molekulargewicht (Mn) von 200 g/mol bis 10000 g/mol, vorzugsweise 200 g/mol bis 8000 g/mol. Geeignete Polytetrahydrofurane sind Verbindungen der allgemeinen Formel

$$HO-\left[(CH_2)_4-O\right]_n-H$$

mit n = 2 bis 200, vorzugsweise 3 bis 150, und Gemische davon. Diese Polytetrahydrofurane weisen vorzugsweise ein zahlenmittleres Molekulargewicht Mn im Bereich von 200 g/mol bis 100000 g/mol, bevorzugt 250 g/mol bis 8000 g/mol, auf. Geeignete Polytetrahydrofurane können durch kationische Polymerisation von Tetrahydrofuran in Gegenwart von sauren Katalysatoren, wie z. B. Schwefelsäure oder Fluoroschwefelsäure, hergestellt werden. Derartige Herstellungsverfahren sind dem Fachmann bekannt.

Geeignete Polyesterpolyole können insbesondere aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen, hergestellt werden. Die Polyesterpolyole besitzen vorzugsweise eine Funktionalität von 2 bis 4, insbesondere 2 bis 3, und ein zahlenmittleres Molekulargewicht (Mn) von 480 g/mol bis 3000 g/mol, vorzugsweise 600 g/mol bis 2000 g/mol und insbesondere 600 g/mol bis 1500 g/mol.

Weiterhin kann die Polyol- Komponente auch Diole oder höherwertige Alkohole umfassen. Geeignete Diole sind Glykole mit vorzugsweise 2 bis 25 Kohlenstoffatomen. Hierzu zählen 1, 2- Ethandiol, 1, 2- Propandiol, 1, 3- Propandiol, 1, 4- Butandiol, 1, 5- Pentandiol, 1, 6- Hexandiol, 1, 10- Decandiol, Diethylenglykol, 2, 2, 4- Trimethylpentandiol-1, 5, 2, 2- Dimethylpropandiol- 1, 3, 1, 4- Dimethylolcyclohexan, 1, 6- Dimethylolcyclohexan, 2, 2- Bis (4- hydroxyphenyl)-propan (Bisphenol A), 2, 2- Bis (4- hydroxyphenyl) butan (Bisphenol B) oder 1, 1- Bis (4- hydroxyphenyl)- 3, 3, 5-trimethylcyclohexan (Bisphenol C) . Geeignete höherwertige Alkohole sind z. B. dreiwertige (Triole), vierwertige (Tetrole) und/ oder fünfwertige Alkohole (Pentole) . Sie weisen in der Regel 3 bis 25, vorzugsweise 3 bis 18 Kohlenstoffatome auf. Hierzu zählen Glycerin, Trimethylolethan, Trimethylolpropan, Erythrit, Pentaerythrit, Sorbit und deren Alkoxylate.

Zur Modifizierung der mechanischen Eigenschaften, z. B. der Härte, kann sich der Zusatz von Kettenverlängerungsmitteln, Vernetzungsmitteln, Abstoppern oder gegebenenfalls auch Gemischen davon als vorteilhaft erweisen. Die Kettenverlängerungs- und/ oder Vernetzungsmittel weisen vorzugsweise ein zahlenmittleres Molekulargewicht (Mn) von 40 g/mol bis 300 g/mol auf. In Betracht kommen vorzugsweise aliphatische, cycloaliphatische und/ oder araliphatische Diole mit 2 bis 14, insbesondere 2 bis 10 Kohlenstoffatomen, wie z. B. Ethylenglykol, 1, 3- Propandiol, 1, 2- Propandiol, 1, 10- Decandiol-, 1, 2-, 1, 3-, 1, 4- Dihydroxycyclohexan, Diethylenglykol, Dipropylenglykol und vorzugsweise Ethylenglykol, 1, 4- Butandiol, 1, 6- Hexandiol und Bis- (2- hydroxyethyl)- hydrochinon, Triole, wie 1, 2, 4-, 1, 3, 5- Trihydroxycyclohexan, Glycerin, Trimethylolpropan, Triethanolamin und niedermolekulare hydroxylgruppenhaltige Polyalkylenoxide auf Basis Ethylen- und/ oder 1, 2- Propylenoxid und den vorgenannten Diolen und/ oder Triolen als Startermoleküle. Geeignete Abstopper umfassen vorzugsweise monofunktionelle Alkohole oder sekundäre Amine.

In einer besonders bevorzugten Ausführungsform ist das erfindungsgemäße Polyurethan aufgebaut aus Hartphasen und Weichphasen, wobei

a) die Weichphasen symmetrisch aufgebaut sind und auf Polyolen mit einem zahlenmittleren Molekulargewicht Mn < 2000 g/mol basieren oder nicht symmetrisch sind und

b) die Hartphasen einen mittleren Durchmesser < 700 Nanometern aufweisen.

In einer bevorzugten Ausführungsform sind hierbei die Weichphasen a) auf Basis von Polyetherpolyolen aufgebaut.

Unter vorzugsweise thermoplastischen Polyurethanen werden hierbei auch Polyharnstoffe verstanden, die bekanntermaßen durch Polyaddition von Diaminen und Diisocyanaten erhältlich sind.

Die erfindungsgemäßen vorzugsweise thermoplastischen Polyurethane können wenigstens ein Additiv enthalten, dass vorzugsweise ausgewählt ist unter Farbmitteln, Antioxidantien, Lichtstabilisierungsmitteln, Metalldesaktivatoren, antistatischen Mitteln, Verstärkungs- und Füllstoffen, Beschlagverhinderungsmittel, Bioziden und Antistatika.

Der Begriff Farbmittel umfasst im Rahmen der Erfindung im Wesentlichen organische Farbstoffe, z. B. organische Verbindungen, die eine Fluoreszenz im sichtbaren Teil des elektromagnetischen Spektrums aufweisen wie Fluoreszenzfarbstoffe. Geeignet sind prinzipiell alle Farbmittel, die eine Lasermarkierung von mit ihnen additivierten Kunststoffteilen zulassen.

Als UV-Stabilisatoren können handelsübliche Verbindungen zum Einsatz kommen. Die Stabilisatorkomponente kann in fester oder flüssiger Form vor, während und nach der Herstellung des Polymers zugefügt werden. Die Stabilisatorkomponente kann vor, während oder nach der Herstellung des Polymers eingearbeitet werden.

Üblicherweise enthält die erfindungsgemäße Polymerzusammensetzung wenigstens einen UV-Stabilisator in einer Menge von 0,01 bis 5 Gew.-%, vorzugsweise 0,02 bis 2,5 Gew.-% und insbesondere bevorzugt 0,01 bis 1,0 Gew.-%, bezogen auf das Gesamtgewicht der Zusammensetzung.

Die erfindungsgemäße Zusammensetzung kann außerdem wenigstens ein unter Antioxidantien, Metalldesaktivatoren, antistatischen Mitteln, Verstärkungs- und Füllstoffen, Beschlagverhinderungsmittel, Bioziden und Antistatika ausgewähltes Additiv enthalten.

Die erfindungsgemäßen vorzugsweise thermoplastischen Polyurethane sind besonders geeignet zur Kennzeichnung mittels energiereicher Strahlung, insbesondere mittels Laser. Die Beschriftung mit dem Laser erfolgt vorzugsweise derart, dass der Probenkörper in den Strahlengang eines Lasers, vorzugsweise eines gepulsten Lasers, gebracht wird. Bevorzugt ist der Einsatz eines Nd-YAG-Lasers. Ferner ist eine Beschriftung mit einem Excimer-Laser, z. B. über eine Maskentechnik möglich. Jedoch sind auch mit anderen herkömmlichen Lasertypen, die eine Wellenlänge in einem Bereich hoher Absorption des verwendeten Absorbers aufweisen, wie z. B. $CO_2$-Lasern die gewünschten Ergebnisse zu erzielen. Die erhaltene Markierung wird durch die Bestrahlungszeit (bzw. Pulszahl bei Pulslasern) und Bestrahlungsleistung des Lasers sowie des verwendeten Kunststoffsystems bestimmt. Die Leistung der verwendeten Laser hängt von der jeweiligen Anwendung ab und kann im Einzelfall vom Fachmann ohne weiteres ermittelt werden.

Die Verwendung der erfindungsgemäßen TPU kann auf allen Gebieten erfolgen, wo bisher übliche Druckverfahren zur Beschriftung von Kunststoffen eingesetzt werden. Vorzugsweise können Formkörper aus dem erfindungsgemäßen TPU in der Elektro-, Elektronik- und Kraftfahrzeugindustrie Anwendung finden. Die Kennzeichnung und Beschriftung von z. B. Kabeln, Leitungen, Zierleisten bzw. Funktionsteilen im Heizungs-, Lüftungs- und Kühlbereich oder Schalter, Stecker, Hebel und Griffe, die aus dem erfindungsgemäßen TPU bestehen, können selbst an schwer zugänglichen Stellen mit Hilfe von Laserlicht markiert werden. Weiterhin kann das erfindungsgemäße TPU aufgrund seines geringen Schwermetallanteils bei Verpackungen im Lebensmittelbereich oder im Spielzeugbereich eingesetzt werden. Die Markierungen auf den Verpackungen zeichnen sich dadurch aus, dass sie wisch- und kratzfest, stabil bei nachträglichen Sterilisationsprozessen, und hygienisch rein beim Markierungsprozess aufbringbar sind. Komplette Etikettenbilder können dauerhaft auf die Verpackung für ein Mehrwegsystem aufgebracht werden. Ein weiteres wichtiges Anwendungsgebiet für die Laserbeschriftung sind Kunststoffmarken zur individuellen Kennzeichnung von Tieren, so genannte Cattle Tags oder Ohrmarken. Über ein Barcodesystem werden die Informationen gespeichert, welche spezifisch dem Tier zugehörig sind. Diese können dann bei Bedarf wieder mit Hilfe eines Scanners abgerufen werden. Die Beschriftung muss sehr dauerhaft werden, da die Marken teilweise über mehrere Jahre an den Tieren verbleiben.

Beispiele

Ausgangssubstanzen

Es wurden Ausgangssubstanzen gemäß folgender Tabelle 1 eingesetzt:

Tabelle 1, Ausgangssubstanzen

| Bezeichnung | Chemische Zusammensetzung | Quelle |
|---|---|---|
| BiO | Bismuthoxid, $Bi_2O_3$ | Sigma-Aldrich |
| Iso | 4,4'-Methylendiphenylendiisocyanat | BASF |
| Polyol | Polytetrahydrofuran, Mn[1)]: 1000, OH-Zahl : 111,1 | BASF |
| KV | 1,4-Butandiol, Kettenverlängerer | BASF |
| AO | Antioxidanz | BASF |
| [1)] Mn ist das zahlenmittlere Molekulargewicht | | |

Bereitstellung des Bismuthoxids

Das Bismuthoxid wurde vor dem Einsatz in einer Kugelmühle zerkleinert und homogenisiert und wies danach folgende Eigenschaften auf:

Gelblich, weißes Pulver
Mittlere Korngröße: < 500 nm

Bereitstellung eines thermoplastischen Polyurethans

PU1

In einem 2 l Weißblecheimer wurden 850 g Polyol und 107,8 g KV eingewogen und auf 80°C aufgeheizt. Anschließend wurden unter Rühren bei 220 U/min 14 g AO und 6,7 g BiO zugegeben. Nach einem Rührschritt von 2 min zur Homogenisierung wurden der Lösung 510 g Iso zugegeben und so lange gerührt (45 s), bis die Lösung eine Temperatur von 110°C erreicht hatte. Die Reaktionsmasse wurde daraufhin in eine flache Schale gegossen und bei 125°C auf einer Heizplatte 10 min gehalten. Danach wurde die entstandene Schwarte in einem Heizschrank 24 h bei 100°C getempert.

PU2

In einem 2 l Weißblecheimer wurden 850 g Polyol und 107,8 g KV eingewogen und auf 80°C aufgeheizt. Anschließend wurden unter Rühren bei 220 U/min 14 g AO und 1,4 g BiO zugegeben. Nach einem Rührschritt von 2 min zur Homogenisierung wurden der Lösung 510 g Iso zugegeben und so lange gerührt (45 s), bis die Lösung eine Temperatur von 110°C erreicht hat. Die Reaktionsmasse wurde daraufhin in eine flache Schale gegossen und bei 125°C auf einer Heizplatte 10 min gehalten. Danach wurde die entstandene Schwarte in einem Heizschrank 24 h bei 100°C getempert.

Das so hergestellte Material wurde zerkleinert und in einer Spritzgussmaschine zu 2 mm Spritzgussplatten verarbeitet.

Messung des Kontrastwertes

Die erhaltenen Platten wurden mittels eines Nd:YAG-Lasers bei einer Wellenlänge von 1064 nm gemäß Tabelle 2 beschriftet. Hierbei wurde ein Laser einer typischen CW-Power von 50 W und einer typischen QS-Power von 10 kW/Puls bei 10 kHz verwendet. Die TPU-Platten zeigten danach eine dunkle Schrift auf transparentem Hintergrund, wobei die Schrift sich "innerhalb" der Prüfplatte befand und keine Oberflächendefekte vorlagen.

Tabelle 2 Kontrastwerte

| Probe [Spritzgussplatte] | Laserstrom [A] | Pulsfrequenz [kHz] | Kontrast [DIN 66236] |
|---|---|---|---|
| PU1 | 26 | 3 | 71,5 |
| PU2 | 30 | 4 | 70,5 |

Kontrastwert

Zur Berechnung der Kontrastwerte wurden der hellste und der dunkelste Punkt von Beschriftung und Untergrund herangezogen. Bei transparenten Proben wurde ein weißer Hintergrund verwendet.

$$\text{Kontrastwert DIN 66236} = \frac{\text{Untergrund - Beschriftung}}{\text{Untergrund}} \times 100$$

Ab einem Kontrastwert von 70 gelten Materialien als gut laserbeschriftbar.

## Patentansprüche

1. Transparentes Polyurethan, welches mittels energiereicher Strahlung beschriftbar ist und ein Bismuthoxid als Kontrastmittel enthält, **dadurch gekennzeichnet, dass** das Bismuthoxid eine mittlere Korngröße < 1,5 μm aufweist und in einer Menge < 0,5 Gew. % bezogen auf das Polyurethan enthalten ist.

2. Polyurethan nach Anspruch 1, **dadurch gekennzeichnet, dass** es ein thermoplastisches Polyurethan (TPU) ist.

3. Polyurethan nach wenigstens einem der vorhergehenden Ansprüche, **dadurch gekennzeichnet, dass** das Bismuthoxid eine mittlere Korngröße < 0,5 μm aufweist.

4. Polyurethan nach wenigstens einem der vorhergehenden Ansprüche, **dadurch gekennzeichnet, dass** das Bismuthoxid die Formel $Bi_2O_3$ hat.

5. Polyurethan nach wenigstens einem der vorhergehenden Ansprüche, **dadurch gekennzeichnet, dass** das Polyurethan aufgebaut ist aus Hartphasen und Weichphasen, wobei

   a) die Weichphasen symmetrisch aufgebaut sind und auf Polyolen mit einem zahlenmittleren Molekulargewicht Mn < 2000 g/mol basieren oder nicht symmetrisch sind und
   b) die Hartphasen einen mittleren Durchmesser < 700 Nanometern aufweisen.

6. Polyurethan gemäß Anspruch 5, **dadurch gekennzeichnet, dass** die Weichphasen a) auf Basis von Polyetherpolyolen aufgebaut sind.

7. Verfahren zur Herstellung eines vorzugsweise thermoplastischen Polyurethans nach wenigstens einem der vorhergehenden Ansprüche, **dadurch gekennzeichnet, dass** das Bismuthoxid in Form eines Konzentrates in einem vorzugsweise thermoplastischen Polyurethan zugegeben wird.

8. Verfahren zur Herstellung transparenter, beschrifteter, vorzugsweise thermoplastischer Polyurethane, **dadurch**

**gekennzeichnet, dass** man ein vorzugsweise thermoplastisches Polyurethan gemäß wenigstens einem der vorhergehenden Ansprüche bildmäßig mit einer energiereichen Strahlung bestrahlt.

9. Verfahren nach Anspruch 8, **dadurch gekennzeichnet, dass** als energiereiche Strahlung die Strahlung eines Lasers verwendet wird.

10. Verfahren nach Anspruch 9, **dadurch gekennzeichnet, dass** ein Nd:YAG-Laser verwendet wird.

11. Bildmäßig beschriftetes, vorzugsweise thermoplastisches Polyurethan erhältlich gemäß wenigstens einem der vorhergehenden Ansprüche, **dadurch gekennzeichnet, dass** es an nicht beschrifteten Stellen transparent ist und zwischen beschrifteten und unbeschrifteten Stellen einen Kontrastwert nach DIN 66236 von mindestens 68, bevorzugt von mindestens 70 aufweist.

12. Verwendung von bildmäßig beschriftetern, vorzugsweise thermoplastischem Polyurethan gemäß einem der Ansprüche 1 bis 6 zur Herstellung von Kennzeichnungsmarken, insbesondere für Tiere.

## Claims

1. A transparent polyurethane which is inscribable by means of high-energy radiation and which comprises a bismuth oxide as contrast agent, wherein the average grain size of the bismuth oxide is < 1.5 μm and the amount comprised thereof is < 0.5% by weight, based on the polyurethane.

2. The polyurethane according to claim 1, which is a thermoplastic polyurethane (TPU).

3. The polyurethane according to at least one of the preceding claims, wherein the average grain size of the bismuth oxide is < 0.5 μm.

4. The polyurethane according to at least one of the preceding claims, wherein the formula of the bismuth oxide is $Bi_2O_3$.

5. The polyurethane according to at least one of the preceding claims, wherein the polyurethane is composed of hard phases and soft phases, where

   a) the soft phases have symmetrical structure and are based on polyols with number-average molar mass Mn < 2000 g/mol, or are not symmetrical, and
   b) the diameter of the hard phases is < 700 nanometers.

6. The polyurethane according to claim 5, wherein the structure of the soft phases a) is based on polyether polyols.

7. A process for the production of a preferably thermoplastic polyurethane according to at least one of the preceding claims, which comprises adding the bismuth oxide in the form of a concentrate in a preferably thermoplastic polyurethane.

8. A process for the production of transparent, inscribed, preferably thermoplastic polyurethanes, which comprises using high-energy radiation to irradiate a preferably thermoplastic polyurethane according to at least one of the preceding claims to produce an image.

9. The process according to claim 8, wherein the high-energy radiation used comprises the radiation from a laser.

10. The process according to claim 9, wherein an Nd:YAG laser is used.

11. A preferably thermoplastic polyurethane that has been inscribed to produce an image and that is obtainable according to at least one of the preceding claims, wherein it is transparent at sites that have not been inscribed, and its DIN 66236 contrast value between inscribed and uninscribed sites is at least 68, preferably at least 70.

12. The use, for the production of identification marks, particularly for animals, of preferably thermoplastic polyurethane according to any of claims 1 to 6, inscribed to produce an image.

## Revendications

1. Polyuréthane transparent, qui est inscriptible au moyen d'un rayonnement riche en énergie et qui contient un oxyde de bismuth comme agent de contraste, **caractérisé en ce que** l'oxyde de bismuth présente une grosseur moyenne de particule < 1,5 μm et est contenu en une quantité < 0,5% en poids par rapport au polyuréthane.

2. Polyuréthane selon la revendication 1, **caractérisé en ce qu'**il s'agit d'un polyuréthane thermoplastique (TPU).

3. Polyuréthane selon au moins l'une quelconque des revendications précédentes, **caractérisé en ce que** l'oxyde de bismuth présente une grosseur moyenne de particule < 0,5 μm.

4. Polyuréthane selon au moins l'une quelconque des revendications précédentes, **caractérisé en ce que** l'oxyde de bismuth présente la formule $Bi_2O_3$.

5. Polyuréthane selon au moins l'une quelconque des revendications précédentes, **caractérisé en ce que** le polyuréthane est formé de phases dures et de phases souples,

   a) les phases souples présentant une structure symétrique et étant à base de polyols présentant un poids moléculaire numérique moyen $M_n$ < 2000 g/mole ou n'étant pas symétriques et
   b) les phases dures présentant un diamètre moyen < 700 nanomètres.

6. Polyuréthane selon la revendication 5, **caractérisé en ce que** les phases souples a) sont à base de polyétherpolyols.

7. Procédé pour la préparation d'un polyuréthane de préférence thermoplastique selon au moins l'une quelconque des revendications précédentes, **caractérisé en ce que** l'oxyde de bismuth est ajouté sous forme d'un concentrat dans un polyuréthane de préférence thermoplastique.

8. Procédé pour la préparation de polyuréthanes transparents, portant une inscription, de préférence thermoplastiques, **caractérisé en ce qu'**on irradie, par un rayonnement riche en énergie, un polyuréthane de préférence thermoplastique selon au moins l'une quelconque des revendications précédentes en formant une image.

9. Procédé selon la revendication 8, **caractérisé en ce qu'**on utilise, comme rayonnement riche en énergie, le rayonnement d'un laser.

10. Procédé selon la revendication 9, **caractérisé en ce qu'**on utilise un laser Nd:YAG.

11. Polyuréthane de préférence thermoplastique, portant une inscription sous forme d'image, pouvant être obtenu selon au moins l'une quelconque des revendications précédentes, **caractérisé en ce qu'**il est transparent aux endroits où il ne porte pas d'inscription et présente, entre les endroits portant et ne portant pas d'inscription, une valeur de contraste selon la norme DIN 66236 d'au moins 68, de préférence d'au moins 70.

12. Utilisation de polyuréthane de préférence thermoplastique, portant une inscription sous forme d'image selon l'une quelconque des revendications 1 à 6 pour la fabrication de marques d'identification, en particulier pour les animaux.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 684144 A
- WO 0100719 A1
- WO 9530546 A1
- WO 2006065611 A1